# EUROPEAN PATENT SPECIFICATION

(11) **EP 3 039 507 B1**
(45) Date of publication and mention of the grant of the patent: **17.03.2021**
(21) Application number: 13892121.8
(22) Date of filing: 19.11.2013
(51) Int. Cl.: G06F 3/01, G06F 3/03, G06F 3/14, G02B 27/01, G06T 19/00

(54) **PORTABLE DEVICE DISPLAYING AUGMENTED REALITY IMAGE AND METHOD OF CONTROLLING THEREFOR**
TRAGBARE VORRICHTUNG MIT ANZEIGE VON AUGMENTED-REALITY-BILDERN UND VERFAHREN ZUR STEUERUNG DAVON
DISPOSITIF PORTATIF AFFICHANT UNE IMAGE DE RÉALITÉ AUGMENTÉE ET SON PROCÉDÉ DE COMMANDE

(30) Priority: 28.08.2013 KR 20130102324; 07.11.2013 US 201314074083
(43) Date of publication of application: 06.07.2016
(73) Proprietor: LG Electronics Inc., Seoul 07336 (KR)
(72) Inventor: KIM, Jihwan, Seoul 137-724 (KR); KIM, Jongho, Seoul 137-724 (KR); CHUN, Sinae, Seoul 137-724 (KR); CHO, Eunhyung, Seoul 137-724 (KR)
(74) Representative: Plasseraud IP
(86) International application number: PCT/KR2013/010492
(87) International publication number: WO 2015/030303

(56) References cited:
- WO-A1-2010/094065
- US-A1- 2010 091 096
- US-A1- 2011 141 254
- US-A1- 2012 075 343
- US-A1- 2012 154 439
- US-A1- 2012 249 528
- US-A1- 2013 141 461
- US-A1- 2013 215 148

## Description

### Technical Field

The present specification relates to a portable device, and more particularly, to a portable device that an angle of view of a camera unit and an angle of view of a display unit are different from each other.

### Background Art

An augmented reality technology of which a real object and a virtual object are mixed together enables a user to see a real image along with an augmented reality image and then provides additional information in addition to a sense of reality. For instance, if a user holds a camera of a smartphone to surroundings, such augmented reality images as a location of a nearby store, a telephone number, and the like are marked as a 3 dimensional image along with a real image. The augmented reality technology can be applied to a wearable computer as well. In particular, such a display put on a head as a head mounted display provides an augmented reality to a user in a manner of overlapping a real environment of which the user currently sees with an augmented reality image, a text, or the like.

US 2010/0091096 A1 discloses an image processing method that uses augmented reality based on markers in which a marker can be sensed in a viewing area which is larger than a display area.

US 2012/0154439 A1 discloses a method for operating multiple objects in an augmented reality system.

US 2013/0215148 A1 discloses an interactive input system in which a physical object carries a pattern for display of associated digital content.

### Disclosure of Invention

### Technical Problem

An augmented reality image is detected by the camera unit and is generated in response to a marker displayed in the display unit. Yet, if an angle of view of the camera unit and that of the display unit are different from each other, the marker detected by the camera unit may not be displayed in the display unit. In this case, a method of processing and displaying the marker and an augmented reality image corresponding to the marker is required.

### Solution to Problem

The invention is defined in the appended claims.

### Advantageous Effects of Invention

According to the present invention, a portable device is defined according to claim 1 and a method of controlling a portable device is defined in claim 2.

### Brief Description of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram of a portable device and an angle of view of the portable device according to one example not being part of the present invention;
FIG. 2 is a diagram of a method of displaying an augmented reality image of a portable device according to one example not being part of the present invention;
FIG. 3 is a diagram of a method of displaying an augmented reality image of a portable device according to a different example not being part of the present invention;
FIG. 4 is a diagram of a method of displaying an indicator of a portable device according to one example, not being part of the present invention, for a marker or an augmented reality image;
FIG. 5 is a diagram of a method of moving and displaying an augmented reality image of a portable device according to one example not being part of the present invention;
FIG. 6 is a diagram of a method of moving and displaying an augmented reality image of a portable device according to a different embodiment of the present specification;
FIG. 7 is a block diagram of a portable device according to one embodiment of the present specification;
FIG. 8 is a flowchart for a method of controlling a portable device according to one example not being part of the present invention.

### Best Mode for Carrying out the Invention

Although terminologies used in the present specification are selected from general terminologies used currently and widely in consideration of functions, they may be changed in accordance with intentions of technicians engaged in the corresponding fields, customs, advents of new technologies and the like. Occasionally, some terminologies may be arbitrarily selected by the applicant(s). In this case, the meanings of the arbitrarily selected terminologies shall be described in the corresponding part of the detailed description of the specification. Therefore, terminologies used in the present specification need to be construed based on the substantial meanings of the corresponding terminologies and the overall matters disclosed in the present specification rather than construed as simple names of the terminologies.

In the present specification, a portable device may include a head mounted display, a smartphone, a smart pad, a tablet computer, a notebook, a music player, or a foldable display device. And, an augmented reality image of the present specification may include a graphic image, a text, a symbol, and an emoticon.

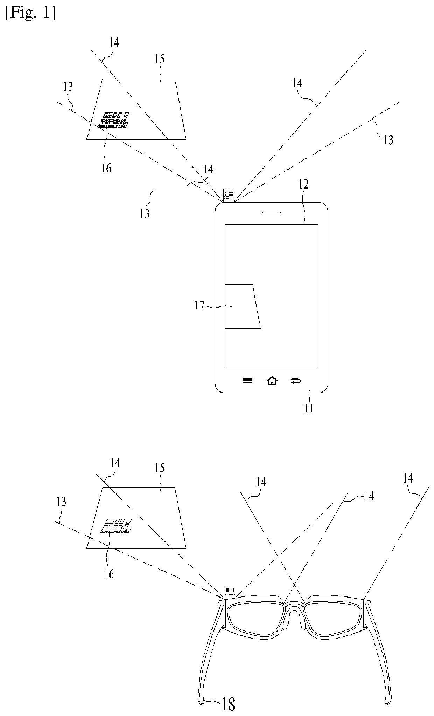

FIG. 1 is a diagram of a portable device and an angle of view of the portable device according to one example not being part of the present invention. The portable device can include a camera unit and a display unit. The camera unit included in the portable device can have a first angle of view and the display unit can have a second angle of view.

In this case, the angle of view of the camera unit may mean an area capable of being detected by an image sensor included in the camera unit. In particular, as the angle of view of the camera unit is wider, an optical image of a wider area can be detected and the optical image of the wider area can be converted to a digital image. And, the angle of view of the display unit may mean an area capable of being displayed in the display unit. For instance, when a camera unit of a smartphone is activated, an area displayed in a display unit of the smartphone can be defined as the angle of view of the display unit. And, when a head mounted display is activated, an area capable of displaying an image within a vision of a user by the head mounted display can be defined as the angle of view of the display unit.

In the present specification, the first angle of view of the camera unit and the second angle of view of the display unit may have a figure different from each other. In particular, in the following description, a case that the first angle of view of the camera unit exceeds the second angle of view of the display unit is explained.

The top of FIG. 1 is a diagram of a smartphone, which is an example of the portable device. The portable device 11 can include a camera unit and a display unit 12. The camera unit can include a first angle of view 13 and can convert an optical image to a digital image. The display unit 12 can include a second angle of view 14 and can display an area corresponding to the second angle of view 14 only among digital images of the first angle of view 13 taken by the camera unit. In particular, the display unit 12 can display a part of the digital images of the first angle of view taken by the camera unit.

The portable device 11 can detect a real object 15 within the first angle of view 13 using the camera unit. The real object may mean an actual object existing in a real space. The real object 15 can include a marker 16 of an augmented reality image. The marker 16 included in the real object 15 can be positioned within the first angle of view 13 and can be positioned outside of the second angle of view 14. Hence, the portable device 11 can detect the marker 16 within the first angle of view 13 using the camera unit. On the contrary, the portable device 11 cannot display the marker 16 using the display unit. This is because the portable device can display the area corresponding to the second angle of view 14 only among the digital images of the first angle of view 13. Since the marker 16 is positioned at the outside of the second angle of view 14 of the display unit 12, the portable device 11 cannot display the marker 16 in the display unit 12.

In order for the portable device 11 to display an augmented reality image in the display unit 12, the marker 16 should be displayed in the display unit 12. Hence, the portable device displays an image 17 of the real object only and does not display the augmented reality image.

The bottom of FIG. 1 is a diagram of a head mounted display, which is an example of the portable device. The portable device 18 can include a camera unit and a display unit. The display unit of the head mounted display can include a projector projecting an optical image. The camera unit may have a first angle of view 13 and can convert the optical image to a digital image. In case that the portable device corresponds to the head mounted display, the portable device may include two display units for a pair of eyes. The display unit may have a second angle of view 14. The portable device 18 can project or display a digital image using the second angle of view 14 smaller than the first angle of view 13, which is detected by the camera unit. In particular, the portable device 18 can display an augmented reality image in a space narrower than a viewing angle of a user or the first angle of view capable of being detected by the camera unit. In other word, the portable device 18 can display an augmented reality image in an area smaller than the area capable of being seen by a user via the head mounted display.

The portable device can detect a real object 15 within the first angle of view 13 using the camera unit. The real object 15 can include a marker 16 of an augmented reality image. The marker 16 included in the real object 15 can be positioned within the first angle of view 13 and can be positioned outside of the second angle of view 14. Hence, the portable device 18 can detect the marker 16 within the first angle of view 13 using the camera unit. On the contrary, the portable device 11 cannot display an augmented reality image in a position of which the marker 16 is detected using the display unit. This is because the portable device can display the augmented reality image in an area corresponding to the second angle of view 14 only among the area of the first angle of view 13. Since the marker 16 is positioned at the outside of the second angle of view 14 of the display unit, the portable device 11 cannot display the augmented reality image corresponding to the marker 16 in the display unit.

In order for the portable device 11 to display an augmented reality image in the display unit, the marker 16 should be positioned at within the second angle of view. Hence, the portable device cannot display the augmented reality image in the display unit.

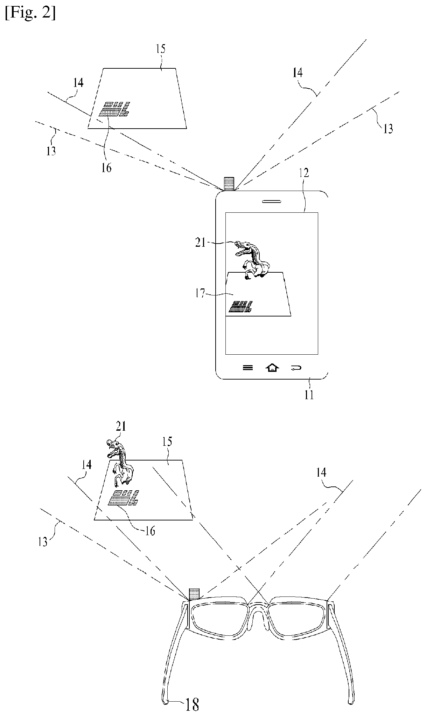

FIG. 2 is a diagram of a method of displaying an augmented reality image of a portable device according to one example not being part of the present invention. The portable device can include a camera unit and a display unit. The camera unit included in the portable device can have a first angle of view and the display unit can have a second angle of view.

In this case, the angle of view of the camera unit may mean an area capable of being detected by an image sensor included in the camera unit. In particular, as the angle of view of the camera unit is wider, an optical image of a wider area can be detected and the optical image of the wider area can be converted to a digital image. And, the angle of view of the display unit may mean an area capable of being displayed in the display unit. For instance, when a camera unit of a smartphone is activated, an area displayed in a display unit of the smartphone can be defined as the angle of view of the display unit. And, when a head mounted display is activated, an area capable of displaying an image within a vision of a user by the head mounted display can be defined as the angle of view of the display unit.

In the present specification, the first angle of view of the camera unit and the second angle of view of the display unit may have a figure different from each other. In particular, in the following description, a case that the first angle of view of the camera unit exceeds the second angle of view of the display unit is explained.

The top of FIG. 2 is a diagram of a smartphone, which is an example of the portable device. The portable device 11 can include a camera unit and a display unit 12. The camera unit can include a first angle of view 13 and can convert an optical image to a digital image. The display unit 12 can include a second angle of view 14 and can display an area corresponding to the second angle of view 14 only among digital images of the first angle of view 13 taken by the camera unit. In particular, the display unit 12 can display a part of the digital images of the first angle of view taken by the camera unit.

The portable device 11 can detect a real object 15 within the first angle of view 13 using the camera unit. The real object 15 can include a marker 16 of an augmented reality image. The marker 16 included in the real object 15 can be positioned within the first angle of view 13 and the second angle of view 14. Hence, the portable device 11 detects the marker 16 within the first angle of view 13 using the camera unit and can display the marker 16 using the display unit. Since the marker is included within the second angle of view, the portable device can display an area corresponding to the second angle of view 14.

The portable device 11 can display an augmented reality image 21 in response to the marker displayed in the display unit 12. Although a user cannot see the augmented reality image 21 with the naked eye, the user can check the augmented reality image 21 via the display unit 12.

The bottom of FIG. 2 is a diagram of a head mounted display, which is an example of the portable device. The portable device 18 can include a camera unit and a display unit. The camera unit may have a first angle of view 13 and can convert the optical image to a digital image. In case that the portable device corresponds to the head mounted display, the portable device may include two display units for a pair of eyes. The display unit of the head mounted display can include a projector projecting an optical image. The display unit may have a second angle of view 14. The portable device 18 can project or display a digital image using the second angle of view 14 smaller than the first angle of view 13, which is detected by the camera unit. In particular, the portable device 18 can display an augmented reality image 21 in a space narrower than a viewing angle of a user or the first angle of view capable of being detected by the camera unit. In other word, the portable device 18 can display an augmented reality image in an area smaller than the area capable of being seen by a user via the head mounted display.

The portable device can detect a real object 15 within the first angle of view 13 using the camera unit. The real object 15 can include a marker 16 of an augmented reality image. The marker 16 included in the real object 15 can be positioned within the first angle of view 13 and the second angle of view 14. Hence, the portable device 18 can detect the marker 16 within the first angle of view 13 using the camera unit. And, the portable device can display the augmented reality image 21 in the position of which the marker is detected using the display unit. The portable device can display the augmented reality image in the area included in the second angle of view 14 since the marker is positioned at within the second angle of view 14. Since the marker 16 is positioned at within the second angle of view 14, the portable device 11 can display the augmented reality image 21 corresponding to the marker 16 in the display unit.

The portable device 18 can display the augmented reality image 21 in response to the marker detected by the camera unit. Although a user cannot see the augmented reality image 21 with the naked eye, the user can check the augmented reality image 21 via the display unit of the portable device 18.

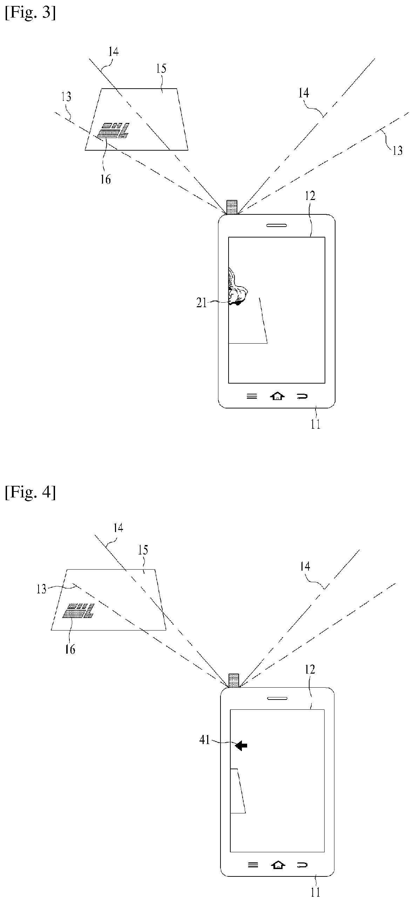

FIG. 3 is a diagram of a method of displaying an augmented reality image of a portable device according to a different example not being part of the present invention. Before a marker enters into a second angle of view of the display unit, the portable device can display an augmented reality image corresponding to the marker. The portable device can detect the marker using a camera unit having a first angle of view wider than the second angle of view of the display unit. Hence, if the marker is positioned at within the first angle of view and is positioned at the outside of the second angle of view, the portable device can display the augmented reality image corresponding to the marker. The augmented reality image displayed in the portable device may correspond to at least a part of the augmented reality images included in the second angle of view. In the following description, although a smartphone is explained as an example, the following explanation can be applied to such various portable devices as a smart pad, a head mounted display, and the like.

The portable device 11 can include a camera unit and a display unit 12. The camera unit can include a first angle of view 13 and can convert an optical image to a digital image. The display unit 12 can include a second angle of view 14 and can display an area corresponding to the second angle of view 14 only among digital images of the first angle of view 13 taken by the camera unit. In particular, the display unit 12 can display a part of the digital images of the first angle of view taken by the camera unit.

The portable device 11 can detect a real object 15 within the first angle of view 13 using the camera unit. The real object 15 can include a marker 16 of an augmented reality image. The marker 16 included in the real object 15 can be positioned within the first angle of view 13 and can be positioned outside of the second angle of view 14. Hence, the portable device 11 can detect the marker 16 within the first angle of view 13 using the camera unit. On the contrary, the portable device 11 cannot display the marker 16 using the display unit. This is because the portable device can display the area corresponding to the second angle of view 14 only among the digital images of the first angle of view 13. Since the marker 16 is positioned at the outside of the second angle of view 14 of the display unit 12, the portable device 11 cannot display the marker 16 in the display unit 12

The portable device 11 can display an augmented reality image 21 before the detected marker is displayed in the display unit 12. If the marker is detected within the first angle of view and the outside of the second angle of view by the camera unit, the portable device 11 can display the augmented reality image 21 corresponding to the detected marker.

A position of the augmented reality image 21 is determined based on a position of the marker. Referring to FIG. 3, since the marker 16 is positioned at the outside of the second angle of view, the augmented reality image 21 can be positioned at the outside of the second angle of view. Yet, in some cases, a part of the augmented reality image 21 can exist within the second angle of view according to a size of the augmented reality image. In particular, in case that the marker 16 is detected at the outside of the second angle of view, if at least a part of the augmented reality image 21 corresponding to the marker 16 is included within the second angle of view, the portable device can display the augmented reality image 21. In this case, the displayed augmented reality image 21 may correspond to a part of the augmented reality image 21 included within the second angle of view.

As depicted in FIG. 3, if a part of the augmented reality image 21 is displayed, the portable device can count down a first timer. If the first timer ends, the portable device can eliminate a part of the augmented reality image 21 displayed in the display unit from the display unit. And, the portable device can display a part of the augmented reality image in a manner of gradually fading out while the first timer operates. If the marker positioned at the outside of the second angle of view enters into the inside of the second angle of view, the portable device can reset or hold the first timer.

FIG. 4 is a diagram of a method of displaying an indicator of a portable device according to one example, not being part of the present invention, for a marker or an augmented reality image. As mentioned earlier in FIG. 2 and FIG. 3, the portable device can detect a marker within a first angle of view. If the detected marker deviates from the first angle of view, the portable device can eliminate an augmented reality image corresponding to the marker from a display unit.

If the detected marker deviates to the outside of the first angle of view, the portable device can display an indicator for the augmented reality image corresponding to the marker. The indicator can include a graphic image or a text indicating at least one selected from the group consisting of a position, a type, a direction, a distance, an angle, and an importance of the marker. When the marker is detected within the first angle of view, if at least a part of the augmented reality image corresponding to the marker is not positioned within a second angle of view, the portable device can display an indicator of the augmented reality image. The indicator can include a graphic image or a text indicating at least one selected from the group consisting of a position, a type, a direction, a distance, an angle, and an importance of the augmented reality image.

The portable device 11 can detect that the detected marker 16 moves to the outside of the first angle of view 13 of the camera unit. The portable device 11 can display the indicator 41 indicating a position of the marker in the display unit 12. By doing so, a user can know a direction to which the portable device should be moved to detect the marker 16 using the indicator 41.

The portable device 11 can detect how much the marker has moved to the outside of the first angle of view 13. After the marker 16 is disappeared from the outside of the first angle of view 13, the portable device 11 can calculate a moving path, a rotation angle, and the like of the portable device 11. The portable device can determine how far the marker is away from the first angle of view using a calculation result. The portable device 11 can display the indicator according to the position of the marker 16. For instance, if an arrow is used as the indicator, the portable device 11 displays the arrow in a manner that the arrow indicates a direction at which the marker 16 is positioned. The portable device can display the arrow in a manner of changing a length of the arrow according to a distance to the marker 16.

The portable device 11 can determine whether the indicator is displayed according to the position of the marker 16. If the marker 16 is separated from the portable device more than a first angle or a first distance, the indicator may not be displayed any more by the portable device 11. If the marker moves more than the first angle or the first distance, the portable device 11 judges that a user does not have an intention to use the corresponding marker again and the indicator for the marker may not be displayed by the portable device.

As a different example, the portable device 11 can detect that no part of the augmented reality image corresponding to the marker 16 detected within the first angle of view is positioned within the second angle of view. The portable device 11 can display the indicator 41 indicating the position of the augmented reality image in the display unit 12. By doing so, a user can know a direction to which the portable device should be moved to display the augmented reality image using the indicator 41.

The portable device 11 can detect how far the augmented reality image is away from the second angle of view 14. The portable device 11 can calculate a position of the marker 16 and a first position of the augmented reality image corresponding to the marker. The first position of the augmented reality image may mean a position of the augmented reality image in a real space. The portable device can determine the position and direction of the augmented reality image based on the first position and a position in which the display unit displays. The portable device 11 can display the indicator according to the position and the direction of the augmented reality image. For instance, if an arrow is used as the indicator, the portable device 11 displays the arrow in a manner that the arrow indicates a direction at which the augmented reality image is positioned. The portable device can display the arrow in a manner of changing a length of the arrow according to a distance to the augmented reality image.

The portable device 11 can determine whether the indicator is displayed according to the position of the augmented reality image. If the augmented reality image is separated from the portable device more than a second angle or a second distance, the indicator may not be displayed any more by the portable device 11. If the augmented reality image is positioned away from the portable device more than the second angle or the second distance, the portable device 11 judges that a user does not have an intention to use the corresponding augmented reality image and the indicator for the augmented reality image may not be displayed by the portable device.

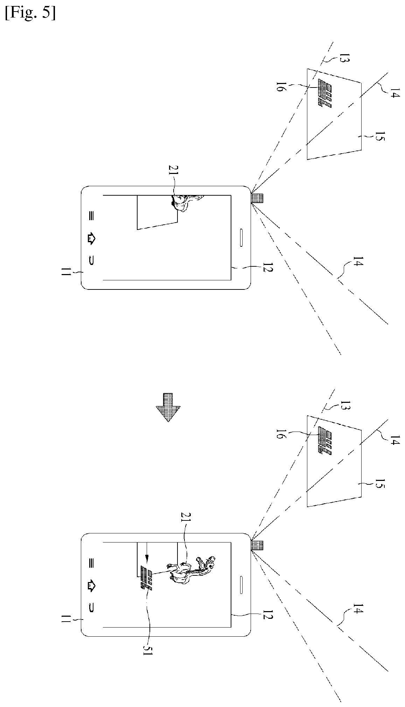

FIG. 5 is a diagram of a method of moving and displaying an augmented reality image of a portable device according to one example not being part of the present invention. A position of an augmented reality image can be determined according to a position of a marker positioned at a real space. The augmented reality image is assigned to a constant first position if the marker does not move. If the display unit or the camera unit of the portable device faces the first position, the augmented reality image can be displayed in the portable device. The portable device of the present specification can display the augmented reality image assigned to the first position in a manner of moving the augmented reality image to a second position.

The left diagram of FIG. 5 is a diagram of the portable device displaying a part of an augmented reality image 21. The portable device 11 can include a camera unit having a first angle of view 13 and a display unit having a second angle of view 14. The portable device 11 can detect a marker 16 within the first angle of view. If the marker 16 is detected at the outside of the second angle of view 14, the marker is not displayed in the display unit. Yet, if at least a part of the augmented reality image 21 corresponding to the marker is included within the second angle of view, the portable device 11 can display the part of the augmented reality image.

Since the marker 16 is positioned at the outside of the second angle of view 14, the portable device can display a part of the augmented reality image 21. As depicted in the right of FIG. 5, the portable device can display the augmented reality image 21, which is displayed in part, in a manner of moving the augmented reality image to a center part of the display area. By doing so, the portable device 11 can display a whole image of the augmented reality image 21.

The portable device 11 can move a position of the displayed augmented reality image by detecting a touch input or a gesture of a user. The portable device can further include a sensor unit configured to detect the touch input or the gesture of the user. As depicted in the left of FIG. 5, the portable device can detect a touch input or a gesture input pointing the displayed part of the augmented reality image. The portable device can configure the pointed augmented reality image 21 as an interested object. The portable device 11 can move the position of the augmented reality image 21 configured as the interested object according to the touch input touching and dragging the augmented reality image 21. A user selects the augmented reality image 21, which is displayed in part, and then drags it to a center area of the display unit. By doing so, the user can check a whole image of the augmented reality image 21. As mentioned in the foregoing description, the portable device can move the augmented reality image 21 assigned to the first position of the real space and display the augmented reality image. By doing so, the portable device can display the whole image of the augmented reality image 21, which is displayed in part.

The portable device 11 can display the marker 16 corresponding to the augmented reality image 21. Referring to the left of FIG. 5, since the marker 16 is positioned at the outside of the second angle of view 14, the marker cannot be displayed in the display unit. Yet, the portable device 11 can display a copied image 51 of the marker detected by the camera unit in a manner of moving the copied image of the marker to the display unit. In particular, the portable device 11 can display the copied image 51 of the marker in a manner of moving the copied image of the marker from the external of the display area to the center part of the display area similar to displaying the augmented reality image 21 in a manner of moving the augmented reality image to the center part of the display unit. By doing so, the portable device can display the copied image 51 of the marker corresponding to the augmented reality image 21.

In displaying the copied image of the marker in a manner of moving the copied image of the marker to the display unit, the portable device can use a time condition. In case that the marker is detected within the first angle of view and the outside of the second angle of view for more than a first time, the portable device can display an image 51 of the detected marker in the display unit. The portable device can further display the augmented realty image corresponding to the displayed marker.

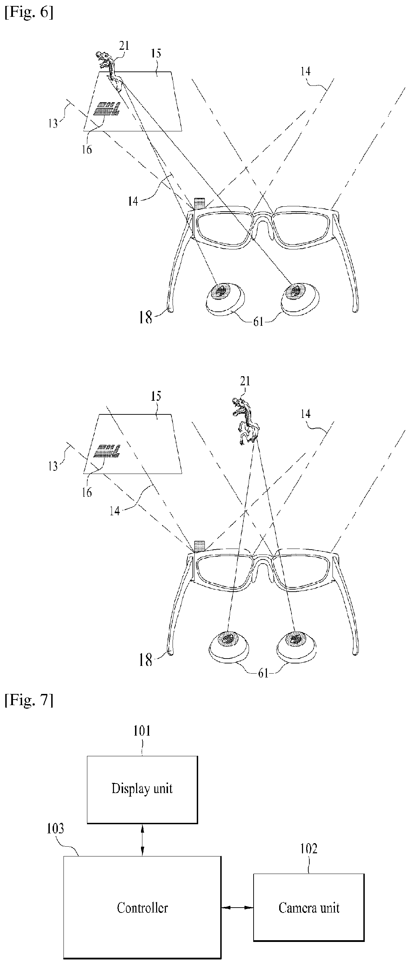

FIG. 6 is a diagram of a method of moving and displaying an augmented reality image of a portable device according to a different embodiment of the present specification. The augmented reality image can be assigned to a first position in a real space according to a position of a corresponding marker. The first position to which the augmented reality image is assigned can be maintained without being changed although the portable device or a gaze of a user moves. Yet, the portable device of the present specification recognizes the gaze of the user and can move a position of the augmented reality image at which the user gazes. The portable device can include a gaze recognition camera. The portable device can detect a direction or an object at which the user gazes using the gaze recognition camera. The portable device can configure the object at which the user gazes as an interested object and can display the interested object in a manner of moving to the center of the display area.

Referring to the top of FIG. 6, the portable device 18 can include a camera unit and a display unit. The camera unit has a first angle of view 13 and can convert an optical image to a digital image. The display unit has a second angle of view 14 and can display an augmented reality image in an area corresponding to the second angle of view 14 among the area capable of being gazed by a user via the portable device.

The portable device 18 can detect a real object 15 within the first angle of view using the camera unit. The real object 15 can include a marker of the augmented reality image. The marker 16 included in the real object 15 is positioned within the first angle of view 13 and can be positioned at the outside of the second angle of view 14. Hence, the portable device 18 can detect the marker 16 within the first angle of view 13 using the camera unit.

The portable device 18 can display an augmented reality image 21 corresponding to the detected marker 16. A position of the augmented reality image 21 corresponding to the marker can be determined based on a position of the marker. Referring to the top of FIG. 6, since the marker 16 is positioned at the outside of the second angle of view, the augmented reality image 21 can be positioned at the outside of the second angle of view. Yet, in some cases, a part of the augmented reality image 21 can exist within the second angle of view 14 according to a size of the augmented reality image. In particular, a part of the augmented reality image 21 exists within the second angle of view 14 and a different part of the augmented reality image can exist outside of the second angle of view 14. Hence, in case that the marker 16 is detected at the outside of the second angle of view, if at least a part of the augmented reality image 21 corresponding to the marker 16 is included in the inside of the second angle of view, the portable device can display the augmented reality image 21. In this case, the displayed augmented reality image 21 may correspond to a part of the augmented reality image 21 included in the inside of the second angle of view. Consequently, although the marker 16 is detected at the outside of the second angle of view 14, if the augmented reality image 21 corresponding to the marker 16 exists in the inside and the outside of the second angle of view 14, the portable device can display a part of the augmented reality image 21 positioned within the second angle of view 14.

Since the area capable of displaying the augmented reality image 21 displayed by the portable device 18 is limited to the inside of the second angle of view 14, referring to the top of FIG. 6, the portable device 18 can display a part of the augmented reality image 21 included in the inside of the second angle of view 14 only. Hence, a user can check a part of the augmented reality image 21 only by a vision.

As depicted in the top of FIG. 6, if the augmented reality image 21 corresponding to the marker 16 exists in the inside and the outside of the second angle of view 14 although the marker 16 is detected at the outside of the second angle of view 14, the portable device can display a part of the augmented reality image positioned at the inside of the second angle of view 14 only among the augmented reality image 21. The portable device 18 can display a position of the augmented reality image 21 in a manner of moving the position of the augmented reality image based on a position of a gaze of a user 61. If the gaze of the user 61 gazes at the augmented reality image 21, which is displayed in part, the portable device 18 can move the augmented reality image to the inside of the second angle of view 14 as depicted in the bottom of FIG. 6.

The portable device can include a sensor unit configured to detect a gaze of a user. If the user gazes at the augmented reality image 21, which is displayed in part, the portable device 18 can move a position of the augmented reality image to provide a whole image of the augmented reality image 21 to the user. Although the augmented reality image 21 is assigned to a first position based on a position of the marker 16, the portable device can display the augmented reality image 21 in a manner of moving the augmented reality image from the first position to a second position for a convenience of the user. In this case, the second position corresponds to a center area of the display area of the portable device 18 or an area included in the inside of the second angle of view. Or, the second position may correspond to a position capable of minimizing a moving distance of the augmented reality image 21 and displaying a whole image of the augmented reality image 21.

The portable device 18 can move the augmented reality image 21 to the second position only when the user gazes at the augmented reality image 21, which is displayed in part, for more than a first time.

If the gaze of the user deviates from the augmented reality image displayed in the second position, the portable device 18 can eliminate the displayed augmented reality image.

FIG. 7 is a block diagram of a portable device according to one embodiment of the present specification. The portable device can include a display unit 101, a camera unit 102, and a controller 103.

The display unit 101 can display at least one of a marker and an augmented reality image corresponding to the marker. The display unit 101 can display an image of a real object detected by the camera unit. The real object can include the marker. The display unit can display the augmented reality image corresponding to the marker in a manner of adding to the image of the real object. If the portable device corresponds to a head mounted display, the real object image may not be displayed. If the portable device corresponds to the head mounted display, the portable device can display the augmented reality image in an object of a real world of which a user sees via a seethrough glass. The display unit has a second angle of view and can display an image included in the second angle of view among the images generated by the camera unit.

According to an example, the display unit 101 can include at least one selected from the group consisting of an organic light-emitting diode (OLED), a liquid crystal display (LCD), an E-ink, a projector, and a flexible display.

The camera unit 102 is configured to take a picture of surroundings of the portable device and can generate an image of a real object with the captured surroundings. The image of the real object can include a marker. The camera unit 102 detects the marker included in the image of the real object and can deliver the marker to the controller. If the image of the real object includes a plurality of markers, the camera unit 102 detects a plurality of the markers and can deliver information on a plurality of the markers to the controller. The camera unit 102 has a first angle of view and can generate the image of the real object included in the first angle of view.

Although it is not depicted in FIG. 7, the portable device can further include a storage unit. The portable device can store at least one of the marker and the augmented reality image corresponding to the marker, which is detected at an angle less than the first angle of view and larger than the second angle of view, in the storage unit. The portable device can display at least one of the marker and the augmented reality image in a manner of loading at least one of the stored marker and the stored augmented reality image even in a situation that the marker is not detected. The storage unit may not be included in the portable device according to embodiment.

Although it is not depicted in FIG. 7, the portable device further includes a sensor unit configured to recognize a gaze of a user. The portable device can determine whether the user gazes at a displayed augmented reality image using the sensor unit. And, the sensor unit can further detect a touch input or a gesture input of a user. The portable device detects a user input pointing a part of the augmented reality image using the sensor unit and can deliver information on the user input to the controller. The sensor unit may not be included in the portable device according to embodiment.

The controller 103 can control the display unit 101 and the camera unit 102 using the information delivered from the camera unit 102. The controller 103 can detects a marker in an image displayed in the display unit 101 or in a digital image generated by the camera unit 102.

If a marker is detected, the controller 103 can display an augmented reality image corresponding to the marker in addition to a real object image. As mentioned earlier in FIG. 3, if a marker is detected within the first angle of view and the outside of the second angle of view, the controller 103 can display an augmented reality image as well. In particular, the controller 103 can display the augmented reality image corresponding to the marker even in a case that the marker does not enter the second angle of view of the display unit yet and the marker is not displayed in the display unit. In this case, the controller 103 can display a part included in the second angle of view of the display unit 101 among the augmented reality images.

The controller 103 can move the augmented reality image displayed in part. As mentioned earlier in FIG. 5 and FIG. 6, if an augmented reality image is displayed in the edge of the display unit, the controller 103 can display the augmented reality image in a center part of the display area in a manner of moving a position of the augmented reality image. By doing so, the portable device can enhance visibility of the augmented reality image and can display a whole area of the augmented reality image displayed in part. The controller 103 can move the augmented reality image in a manner of detecting a touch input, a gesture input, or a gaze input of a user.

FIG. 7 is a block diagram according to one embodiment. Blocks represented as being separated are depicted for elements of the portable device in a manner of being logically distinguished. Thus, the aforementioned elements of the portable device may be equipped with a single chip or a plurality of chips according to a design of the portable device.

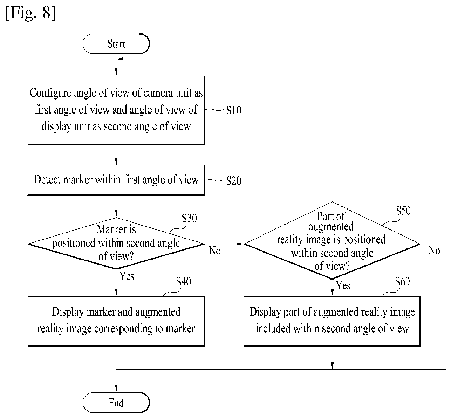

FIG. 8 is a flowchart for a method of controlling a portable device according to one example not being part of the present invention. The portable device can set an angle of view of the camera unit and an angle of view of the display unit to a first angle of view and a second angle of view, respectively [S10]. As mentioned earlier in FIG. 1, the camera unit of the portable device may have a first angle of view. The camera unit can detect a real object positioned within the first angle of view and a marker included in the real object. The portable device can convert an optical image sensed within the first angle of view to a digital image using the camera unit and can deliver information on the digital image to the controller. The display unit can display an area corresponding to an inside of the second angle of view among the digital images generated by the camera unit. In this case, the second angle of view may be less than the first angle of view. In particular, for a digital image of the first angle of view taken by the camera unit, the display unit can display an area corresponding to the second angle of view, which is a part of the first angle of view. If the portable device corresponds to a head mounted display, a part of the digital image captured by the camera unit may not be displayed.

The portable device can detect a marker [S20]. As mentioned earlier in FIG. 1 to FIG. 3, the portable device can detect the marker positioned within the first angle of view using the camera unit. The marker may correspond to an augmented reality image.

The portable device can determine whether the marker is positioned within the second angle of view of the display unit [S30]. The portable device can determine whether a position of the marker detected within the first angle of view is the inside of the second angle of view. The second angle of view is an angle of view of the display unit. If the marker is positioned within the second angle of view, the portable device can display an image of the marker in the display unit.

The portable device can display an augmented reality image corresponding to the marker [S40]. If the marker is positioned within the second angle of view of the display unit, the portable device can display an image of the marker. The portable device can display the augmented reality image corresponding to the marker. The portable device can display a whole area of the augmented reality image corresponding to the marker.

The portable device can determine whether a part of the augmented reality image is positioned within the second angle of view [S50]. As mentioned earlier in FIG. 3, if the marker is positioned at the outside of the second angle of view of the display unit, the portable device cannot display the image of the marker. Although the portable device has detected the marker within the first angle of view, the image of the marker is not displayed in the display unit. The portable device can determine a first position of the augmented reality image corresponding to the marker. The first position of the augmented reality image may mean a position in a real space. The portable device can determine whether at least a part of the augmented reality image positioned at the first position is positioned within the second angle of view.

The portable device can display a part of the augmented reality image included within the second angle of view [S60]. As mentioned earlier in FIG. 3, if a part of the augmented reality image is positioned within the second angle of view of the display unit, the portable device can display the augmented reality image. In this case, the displayed augmented reality image may correspond to a part of the augmented reality image positioned within the second angle of view. In particular, the portable device can display the augmented reality image included within the second angle of view of the display unit in advance before the marker is displayed in the display unit. By doing so, a user can know a direction at which the augmented reality image is positioned and a direction to which the portable device should be moved to see a whole area of the augmented reality image.

If no part of the augmented reality image is positioned within the second angle of view of the display unit, the portable device cannot display the augmented reality image. In particular, if the whole area of the augmented reality image is positioned at the outside of the second angle of view, the portable device cannot display the augmented reality image. Yet, as mentioned earlier in FIG. 4, if the marker is detected in the first angle of view and no part of the augmented reality image is included in the second angle of view, the portable device can display an indicator indicating a property of the augmented reality image.

As mentioned in the foregoing description, the portable device of the present specification can display the augmented reality image corresponding to the marker even in a situation that the marker is detected at the outside of the second angle of view of the display unit. The portable device can display the augmented reality image corre-sponding to the marker before the marker is displayed as well.

It will be apparent to those skilled in the art that various modifications and variations can be made in the present specification without departing from the scope of the inventions. Thus, it is intended that the present specification covers the modifications and variations of this invention provided they come within the scope of the appended daims and their equivalents.

### Mode for the Invention

Various embodiments have been described in the best mode for carrying out the invention.

It will be apparent to those skilled in the art that various modifications and variations can be made in the present invention without departing from the scope of the invention, as defined by the appended claims.

### Industrial Applicability

As described above, the present invention is totally or partially applicable to electronic devices.

## Claims

1. A portable device (11), comprising:
a camera unit (102) configured to detect a marker existing within a first angle of view corresponding to an area detected by an image sensor of the camera unit;
a display unit (101) configured to display a portion of the detected area, corresponding to a second angle of view which is less than the first angle of view; and
a controller (103) configured to control the camera unit (102) and the display unit (101),
wherein the controller (103) is further configured to display a first part of an augmented reality image corresponding to the marker in response to the marker being detected at an angle comprised in the first angle of view and but outside the second angle of view,
wherein the first part corresponds to a part of the augmented reality image positioned within the second angle of view,
**characterized in that** the portable device (11) further comprises a gaze recognition camera and wherein the controller (103) is further configured to:
detect a user's gaze via the gaze recognition camera;
display, via the display unit (102), the augmented reality image in a manner of moving the augmented reality image to a center part of the displayed area in response to the user gazing at the first part of the augmented reality image, and
eliminate the displayed augmented reality image when the gaze of the user deviates from an area in which the augmented reality image is displayed.

2. A method of controlling a portable device (11) comprising a camera unit (102) having a first angle of view which corresponds to an area detected by an image sensor of the camera unit, the portable device (11) further comprising a display unit (101) configured to display a portion of the detected area corresponding to a second angle of view to display, wherein the second angle of view is less than the first angle of view; the method comprising the steps of:
detecting, by the camera unit (102), a marker at an angle comprised in the first angle of view but outside the second angle of view; and
displaying, by the display unit (101), a first part of an augmented reality image corresponding to the marker,
wherein the first part corresponds to a part of the augmented reality image positioned within the second angle of view,
**characterized by**:
detecting a user's gaze via a gaze recognition camera further comprised in the portable device;
displaying, via the display unit, the augmented reality image in a manner of moving the augmented reality image to a center part of the displayed area in response to the user gazing at the first part of the augmented reality image, and
eliminating the displayed augmented reality image when the gaze of the user deviates from an area in which the augmented reality image is displayed.

## Patentansprüche

1. Tragbare Vorrichtung (11), die aufweist:
eine Kameraeinheit (102), die konfiguriert ist, um eine Markierung, die innerhalb eines ersten Sichtwinkels, der einem von einem Bildsensor der Kameraeinheit erfassten Bereich entspricht, vorhanden ist, zu erfassen;
eine Anzeigeeinheit (101), die konfiguriert ist, um einen Abschnitt des erfassten Bereichs, der einem zweiten Sichtwinkel, der kleiner als der erste Sichtwinkel ist, entspricht, zu erfassen; und
eine Steuerung (103), die konfiguriert ist, um die Kameraeinheit (102) und die Anzeigeeinheit (101) zu steuern,
wobei die Steuerung (103) ferner konfiguriert ist, um ansprechend darauf, dass die Markierung, die in einem Winkel erfasst wird, welcher in dem ersten Sichtwinkel enthalten, aber außerhalb des zweiten Sichtwinkels ist, einen ersten Teil eines Augmented-Reality-Bilds, welcher der Markierung entspricht, anzuzeigen,
wobei der erste Teil einem Teil des Augmented-Reality-Bilds entspricht, der innerhalb des zweiten Sichtwinkels positioniert ist,
**dadurch gekennzeichnet, dass** die tragbare Vorrichtung (11) ferner eine Blickerkennungskamera aufweist, und wobei die Steuerung (103) ferner konfiguriert ist, um:
über die Blickerkennungskamera einen Blick eines Benutzers zu erfassen;
ansprechend darauf, dass der Benutzer auf den ersten Teil des Augmented-Reality-Bilds blickt, das Augmented-Reality-Bild über die Anzeigeeinheit (102) in einer Weise anzuzeigen, in der das Augmented-Reality-Bild in einen Mittelteil des angezeigten Bereichs verschoben wird, und
das angezeigte Augmented-Reality-Bild zu entfernen, wenn der Blick des Benutzers von einem Bereich, in dem das Augmented-Reality-Bild angezeigt wird, abweicht.

2. Verfahren zur Steuerung einer tragbaren Vorrichtung (11), die eine Kameraeinheit (102) aufweist, die einen ersten Sichtwinkel hat, der einem von einem Bildsensor der Kameraeinheit erfassten Bereich entspricht, wobei die tragbare Vorrichtung (11) ferner eine Anzeigeeinheit (101) aufweist, die konfiguriert ist, um einen Abschnitt des erfassten Bereichs, der einem anzuzeigenden zweiten Sichtwinkel, entspricht, anzuzeigen, wobei der zweite Sichtwinkel kleiner als der erste Sichtwinkel ist; wobei das Verfahren die folgenden Schritte aufweist:
Erfassen einer Markierung, die in dem ersten Sichtwinkel enthalten, aber außerhalb des zweiten Sichtwinkels ist, durch die Kameraeinheit (102); und
Anzeigen eines ersten Teils eines Augmented-Reality-Bilds, welcher der Markierung entspricht, durch die Anzeigeeinheit (101),
wobei der erste Teil einem Teil des Augmented-Reality-Bilds entspricht, der innerhalb des zweiten Sichtwinkels positioniert ist,
**gekennzeichnet durch**:
Erfassen eines Blicks eines Benutzers über eine Blickerkennungskamera, die ferner in der tragbaren Vorrichtung enthalten ist;
Anzeigen des Augmented-Reality-Bilds über die Anzeigeeinheit in einer Weise, in der das Augmented-Reality-Bild ansprechend darauf, dass der Benutzer auf den ersten Teil des Augmented-Reality-Bilds blickt, in einen Mittelteil des angezeigten Bereichs verschoben wird, und
Entfernen des Augmented-Reality-Bild, wenn der Blick des Benutzers von einem Bereich abweicht, in dem das Augmented-Reality-Bild angezeigt wird.

## Revendications

1. Dispositif portatif (11), comprenant :
une unité de caméra (102) configurée pour détecter un marqueur existant à l'intérieur d'un premier angle de prise de vue correspondant à une zone détectée par un capteur d'image de l'unité de caméra ;
une unité d'affichage (101) configurée pour afficher une partie de la zone détectée, correspondant à un second angle de prise de vue qui est inférieur au premier angle de prise de vue ; et
un contrôleur (103) configuré pour commander l'unité de caméra (102) et l'unité d'affichage (101),
dans lequel le contrôleur (103) est en outre configuré pour afficher une première partie d'une image de réalité augmentée correspondant au marqueur en réponse à la détection du marqueur à un angle compris dans le premier angle de prise de vue, mais en dehors du second angle de prise de vue,
dans lequel la première partie correspond à une partie de l'image de réalité augmentée positionnée à l'intérieur du second angle de prise de vue,
**caractérisé en ce que** le dispositif portatif (11) comprend en outre une caméra de reconnaissance du regard et dans lequel le contrôleur (103) est en outre configuré pour :
détecter le regard d'un utilisateur via la caméra de reconnaissance du regard ;
afficher, via l'unité d'affichage (102), l'image de réalité augmentée de manière à déplacer l'image de réalité augmentée vers une partie centrale de la zone affichée en réponse à l'utilisateur regardant vers la première partie de l'image de réalité augmentée, et
supprimer l'image de réalité augmentée affichée lorsque le regard de l'utilisateur s'écarte d'une zone dans laquelle l'image de réalité augmentée est affichée.

2. Procédé de commande d'un dispositif portatif (11), comprenant une unité de caméra (102) ayant un premier angle de prise de vue qui correspond à une zone détectée par un capteur d'image de l'unité de caméra, le dispositif portatif (11) comprenant en outre une unité d'affichage (101) configurée pour afficher une portion de la zone détectée correspondant à un second angle de prise de vue à afficher, dans lequel le second angle de prise de vue est inférieur au premier angle de prise de vue ; le procédé comprenant les étapes consistant à :
détecter, par l'unité de caméra (102), un marqueur à un angle compris dans le premier angle de prise de vue, mais en dehors du second angle de prise de vue ; et
afficher, par l'unité d'affichage (101), une première partie d'une image de réalité augmentée correspondant au marqueur,
dans lequel la première partie correspond à une partie de l'image de réalité augmentée positionnée à l'intérieur du second angle de prise de vue,
**caractérisé par** :
la détection du regard d'un utilisateur via une caméra de reconnaissance du regard comprise en outre dans le dispositif portatif ;
l'affichage, via l'unité d'affichage, de l'image de réalité augmentée de manière à déplacer l'image de réalité augmentée vers une partie centrale de la zone affichée en réponse à l'utilisateur regardant vers la première partie de l'image de réalité augmentée, et
la suppression de l'image de réalité augmentée lorsque le regard de l'utilisateur s'écarte d'une zone dans laquelle l'image de réalité augmentée est affichée.
